# EUROPÄISCHE PATENTSCHRIFT

(11) **EP 2 799 317 B1**
(45) Veröffentlichungstag und Bekanntmachung des Hinweises auf die Patenterteilung: **27.09.2017**
(21) Anmeldenummer: 14164744.6
(22) Anmeldetag: 15.04.2014
(51) Int. Cl.: B62J 7/08, B62J 7/04

(54) **Gepäckfixierungsvorrichtung für ein Zweirad**
Luggage fixing device for a bicycle
Dispositif de fixation de bagage pour une bicyclette

(30) Priorität: 15.04.2013 DE 102013103787
(43) Veröffentlichungstag der Anmeldung: 05.11.2014
(73) Patentinhaber: Fleischmann, Andreas, 80809 München (DE)
(72) Erfinder: Fleischmann, Andreas, 80809 München (DE)
(74) Vertreter: Schmidt, Axel

(56) Entgegenhaltungen:
- DE-U1-202009 014 211
- US-A- 3 659 761
- US-A- 3 873 127
- US-A- 5 222 639
- US-A1- 2010 170 924

## Beschreibung

Die vorliegende Erfindung betrifft eine Gepäckfixierungsvorrichtung für ein Zweirad, insbesondere ein Fahrrad oder Kraftrad.

Es ist seit langem bekannt, dass an motorisierten wie auch nicht motorisierten Zweirädern Vorrichtungen zur Gepäckfixierung vorgesehen sind, die dem beschränkt zur Verfügung stehenden Bauraum und der Fahrstabilität eines Zweirades angepasst sind. Üblicherweise sind derartige Vorrichtungen über einem Hinterrad angeordnet. Hier ist neben dem Einsatz einer federbelasteten Klappe bzw. einem Drahtbügel auch die Verwendung von einzuhakenden, längs und/oder quer verlaufenden Spanngurten, 4- und mehrarmigen Gepäckspinnen oder Gepäcknetzen an jeglicher Bauform von Fahrrad-Gepäckträgern seit langem bekannt. Genauso bekannt sind allerdings auch die sich aus der Verwendung der vorstehend genannten Mittel ergebenden Probleme der Ladungssicherung, da sich insbesondere bei Fixierung von Rucksäcken diese gern auf einem recht schmalen Fahrrad-Gepäckträger verschieben und insgesamt oder in Form eines Tragegurtes vom Fahrrad-Gepäckträger herab und dann z.B. in Speichen, eine Kette oder gar eine Kettenschaltung des Fahrrads rutschen können. Dieses Gefährdungspotential wird durch Verlagerung eines Gepäckstücks auf den Rücken eines jeweiligen Fahrers nicht deutlich gesenkt, da hiermit u.a. der Gesamtschwerpunkt verschoben und die Beweglichkeit des Fahrers eingeschränkt werden kann.

Alternativ ist eine Gepäckfixierungsvorrichtung in Form eines an einer Sattelstange fixierbaren Fahrrad-Gepäckträgers mit abnehmbarer Tasche als System aufeinander angepasster Elemente bekannt. Die Tasche kann einzeln mit einem Schultergurt getragen werden und wird über ein Klicksystem mit dem Gepäckträger verbunden, so dass sie jederzeit einfach entfernt werden kann. Damit bildet das vorstehend beschriebene System ein geschlossenes Spezialsystem mit aufeinander angepassten Komponenten, das nicht offen auf die vielfältigen Arten von heute insbesondere auf Fahrrad-Gepäckträgern beförderten Transportgütern anpassbar ist.

Auch sind an den Seiten eines Fahrrad-Gepäckträgers z.B. über spezielle Haken einhängbare Transporttaschen bekannt. Fixierungen von Gepäckstücken im Bereich der Rad-Achsen, sog. Lowrider, sind ebenfalls nur für besonders zum Einhängen an einer Rahmenkonstruktion angepasste Transporttaschen nutzbar und bleiben hier ebenfalls außer Betracht.

Aus der US 3873127 A ist eine Gepäckfixierungsvorrichtung mit einem Spannmittel für ein Zweirad bekannt, wobei die Gepäckfixierungsvorrichtung grundsätzlich drei Fixierungspunkte an dem betreffenden Zweirad aufweist.

US 5,222,639 A offenbart eine Fixierungsvorrichtung für ein Zweirad, die vier rechtwinklig gebogene Hebel umfasst. Hier ist jeder der Hebel in einer Hülse verschieblich und drehbar auf einen Gepäckträger des Zweirades gehalten fixiert.

DE 20 2009 014 211 U1 offenbart einen über eine zentrale Stütze mit der Möglichkeit einer Längenanpassung direkt an einem Fahrradrahmen bzw. an einer Sattelstütze fixierbaren Gepäckbehälter. Dieser Gepäckbehälter selber ist netzartig bzw. basketballkorbähnlich ausgebildet.

Es ist Aufgabe der vorliegenden Erfindung, jenseits einer einfachen Fixierung einer Gepäckfixierungsvorrichtung zur zuverlässigen Sicherung einer Ladung in Form verschiedener bekannter Gepäckstücke, insbesondere von Rucksäcken, Tüten oder Taschen, auch ein in jedem Zustand sicheres und gesichertes Spannmittel bereitzustellen.

Die Aufgabe wird durch eine Vorrichtung mit den Merkmalen des Hauptanspruchs dadurch gelöst, dass eine erfindungsgemäße Gepäckfixierungsvorrichtung für ein Zweirad, insbesondere ein Fahrrad oder Kraftrad, eine erste Fixierung, ein Haltemittel, eine zweite Fixierung und mindestens ein Spannmittel umfasst, wobei das Haltemittel im Wesentlichen vertikal verlaufend in einer im Wesentlichen senkrechten Position arretierbar ist und zur Aufnahme von Gepäck im Bereich eines Hinterrad-Gepäckträgers und zur Sicherung des Gepäcks durch das mindestens eine Spannmittel ausgebildet ist und über die erste Fixierung und die zweite Fixierung direkt oder indirekt mit dem Zweirad verbunden ist und diese Gepäckfixierungsvorrichtung dadurch gekennzeichnet ist, dass das mindestens eine Spannmittel im Inneren des Haltemittels geführt ist. Das Haltemittel ist zur Aufnahme von Gepäck im Bereich eines Hinterrades oder Hinterrad-Gepäckträgers und zur Sicherung des Gepäcks durch das mindestens eine Spannmittel im Wesentlichen vertikal verlaufend ausgebildet. Über die erste Fixierung und die zweite Fixierung ist das Haltemittel direkt mit dem Zweirad bzw. einem Rahmen des Zweirads verbunden oder indirekt, z.B. über einen Gepäckträger als Anbauteil an dem Rahmen des Zweirads. Ein Vorteil einer erfindungsgemäßen Gepäckfixierungsvorrichtung besteht darin, dass Lasten sicher und stabil auch an oder auf einer Gepäckauflage befestigt und ohne Verrutschen transportiert werden können. Dadurch wird der Transport eines Gepäckstücks, beispielsweise eines Rucksacks, am Körper des Fahrers vermieden. Eine ungünstige Beeinflussung des Fahrverhaltens des Zweirads aufgrund des durch den Rucksack stark verschobenen Schwerpunkts ist erfindungsgemäß nur noch in vermindertem Umfang gegeben. Durch die Führung des mindestens einen Spannmittels wird nun zudem effektiv verhindert, dass das Spannmittel beispielsweise nach Art eine bekannten Tragegurtes von dem Fahrrad-Gepäckträger herab und dann z.B. in Speichen, eine Kette oder gar eine Kettenschaltung des Fahrrads rutschen kann. Eine Führung des Spannmittels im Inneren des Haltemittels zeichnet sich zudem durch seine Einfachheit und Zuverlässigkeit aus. Zudem ist ein derartiges Spannmittel über die nachfolgend beispielhaft dargestellte Variationsbreite von Haltemitteln und zugehörigen Gepäckfixierungsvorrichtungen grundsätzlich einsetzbar.

Weitere vorteilhafte Ausgestaltungen und vorteilhafte Weiterbildungen sind Gegenstand der Unteransprüche. Demnach kann eine erfindungsgemäße Vorrichtung mit einem Haltemittel sowie einer ersten und einer zweiten Fixierung bereits integraler Bestandteil z.B. eines Gepäckträgers an einem Fahrrad sein, aber auch als Zusatzteil einfach und mit geringem Werkzeugaufwand schnell und zuverlässig nachgerüstet werden. Zur Befestigung als Nachrüstteil an einem Zweirad sind dabei in diversen Ausführungsformen mehrere Möglichkeiten gegeben, die allesamt mit einfachen Mitteln ohne nennenswerten Aufwand bewerkstelligt werden können. Zudem weist diese Gepäckfixierungsvorrichtung eine geringe Zahl von Einzelteilen auf und ist zudem schnell, sicher und einfach an einem Zweirad montierbar.

In einer Ausführungsform der Erfindung sind die erste Fixierung und die zweite Fixierung über das Haltemittel selber miteinander verbunden. Dabei können in einer bevorzugten Ausführungsform der Erfindung die erste Fixierung an einer Gepäckauflage bzw. einem Gepäckträger und die zweite Fixierung an einem Rahmenteil des Zweirads, insbesondere im Bereich einer Hinterachs-Narbe angeordnet sein. Vorteilhafter Weise kann die erste Fixierung in Form mindestens eines Hakens ausgeführt sein, der zur Fixierung an einem Gepäckträger durch Einhängen oder Festklemmen ausgebildet ist. Dann muss nur die zweite Fixierung in lösbarer Form z.B. als Verschraubung ausgeführt sein, damit eine erfindungsgemäße Anordnung nachrüstbar ist.

In weiteren bevorzugten Ausführungsformen der Erfindung ist das Haltemittel um einen Bügel oder als im Wesentlichen U-förmig ausgebildeten Bügel erweitert und als einen Hinterreifen des Zweirads umgreifendes Bauteil ausgebildet. Das so aufgebaute Haltemittel ist an Fixierungen im Bereich der Hinterradachse schwenkbar zwischen einer im Wesentlichen senkrechten Position und einer passiven Stellung parallel an einem Rahmenteil angelenkt. Dabei ist die erste Fixierung in einer Ausführungsform in Form mindestens einer Gelenkkette ausgeführt, durch die das Haltemittel mit einem Rahmenteil im Bereich z.B. hier einer Fixierung eines Sattelrohrs gekoppelt ist. In einer alternativen Ausführungsform weist mindestens eine der gelenkartig ausgebildeten Fixierungen des Haltemittels mindestens eine, vorzugsweise zwei Rasterstellungen für eine Aktivstellung und/oder eine Passivstellung auf.

Ferner kann alternativ die erste Fixierung als Hülse oder in sonstiger Form als Gleitlager ausgebildet sein, die an oder auf dem Haltemittel verschieblich gelagert sowie arretierbar und über mindestens einen Stab insbesondere im Bereich eines Sattels des Zweirads verbunden ist, bevorzugt werden zwei Stäbe zur Fixierung an unterschiedlichen Stellen des Rahmens verwendet, um Querkräfte besser aufnehmen zu können. Die zweite Fixierung kann in vorstehend angegebener Weise an einem Rahmenteil des Zweirads angeordnet sein, also vorzugsweise im Bereich einer Hinterradachse.

In einer weiteren Ausführungsform sind die erste Fixierung und die zweite Fixierung an einer Gepäckauflage bzw. einem Gepäckträger befestigt, wobei die erste Fixierung und die zweite Fixierung über ein Verbindungselement z.B. in Form eines Bügels oder einer Schiene miteinander verbunden sind. Das Haltemittel ist dann an dem Verbindungselement fixiert. Vorzugsweise sind dabei die erste Fixierung und/oder zweite Fixierung unterhalb einer Gepäckauflage angeordnet. Hierbei kann vorteilhafter Weise die erste Fixierung und/oder die zweite Fixierung unterhalb einer Gepäckauflage angeordnet sein. So werden eventuell störende Unebenheiten durch das Verbindungselement auf oder im Bereich der Gepäckauflage vermieden.

Allen vorstehend genannten Alternativen ist in einer bevorzugten Ausführungsform der Erfindung gemein, dass das Haltemittel an dem Verbindungselement oder im Bereich einer ersten Fixierung zwischen einer im Wesentlichen horizontalen Ruhelage parallel zu einer Längsachse des Zweirads und einer im Wesentlichen vertikalen Lage schwenkbar ausgebildet sein kann. Damit ist es vorteilhafter Weise leicht möglich, das Haltemittel bei Nichtnutzung einfach wegzuklappen - und/oder gemäß nachfolgender Beschreibung teleskopartig zusammen zu schieben - um damit jede mögliche Störung zu vermeiden. Dazu kann das Haltemittel oberhalb der Gepäckauflage schwenkbar gelagert sein, aber auch seitlich und im Wesentlichen niveaugleich mit der Fläche der Gepäckauflage. Es ist damit in beiden Fällen jederzeit gut zugänglich, ohne aber in einer Passiv-Stellung zu stören. Zur Stabilität einer erfindungsgemäßen Vorrichtung trägt dabei ganz wesentlich bei, dass das Haltemittel in einer Ausführungsform der Erfindung in einer im Wesentlichen senkrechten Position arretierbar ist.

Besonders bevorzugt ist, dass das Spannmittel von einem freien Ende des Haltemittels her und an einer der ersten Fixierung gegenüber liegenden Seite an einer Gepäckauflage oder an einem Rahmenteil eines Zweirads befestigbar ist. Dazu kann das Haltemittel teleskopierbar und insbesondere teleskopartig in einer Höhe einem Gepäckstück entsprechend anpassbar sein, wobei es stufenlos oder gestuft in der Höhe anpassbar und in einer jeweils eingerichteten Höhe fixierbar sein kann.

Das Haltemittel weist in einer Ausführungsform der Erfindung an einem freien Ende eine Aussparung oder Ausnehmung auf, die insbesondere griffförmig ausgebildet ist. Hierin kann ein Griff einer Tasche als Transportgepäck eingehängt werden, wie z.B. auch Gurte eines Rucksacks, um in beiden Fällen jedes anderweitige Verhaken zu verhindern. Zudem kann an einer derartigen griffförmigen Aussparung mindestens ein Spanngurt fixiert oder eingehängt werden. Vorzugsweise ist als Spannmittel mindestens ein elastischer Gurt vorgesehen, der an einem Ende an dem Haltemittel fixiert ist. Dabei ist in einer besonders bevorzugten Ausführungsform der Erfindung ein erstes Ende des Spannmittels in dem Haltemittel durch ein Mittel zur Einstellung einer jeweils gewünschten Länge fixiert, während ein zweites Ende des Spannmittels zur Lagesicherung eines Gepäckstücks durch Fixierung bzw. Einhaken z.B. an einem Gepäckträger frei verfügbar ist.

Vorzugsweise weist das Spannmittel in Form eines elastischen Gurts bzw. Spanngurtes an einem losen bzw. freien Ende eine Öse mit einem Haken oder direkt einen Haken auf, der zum Befestigen des Gepäcks und/oder zum sicheren Fixieren des ungenutzten Spannmittels durch Einhaken an einer Aussparung insbesondere im Bereich der zweiten Fixierung nutzbar ist.

Demnach ist es vorteilhaft, dass eine erfindungsgemäße Gepäckfixierungsvorrichtung sowohl an herkömmliche, fest mit dem Zweiradrahmen verbundene Gepäckträgersysteme als auch an abnehmbare Gepäckträgersysteme, wie beispielsweise an Sattelstützen befestigte Gepäckablagen oder gar Bügelschlösser montiert werden kann. Durch die Schaffung einer eigenen Gepäckauflage mit daran oder darin fixierten Spannmitteln kann eine erfindungsgemäße Gepäckfixierungsvorrichtung gemäß einer Ausführungsform der Erfindung auch dann eingesetzt werden, wenn sonst gar kein Gepäckträger an einem Zweirad vorhanden ist, wie diese z.B. bei sog. Mountainbikes regelmäßig der Fall ist.

Die Erfindung wird nachfolgend anhand von Ausführungsbeispielen in Verbindung mit den Figuren der Zeichnung näher beschrieben. Es zeigen in schematischer Darstellung:
- Figuren 1a und 1b:: ein erstes Ausführungsbeispiel für eine Gepäckfixierungsvorrichtung an einem Zweirad in einer seitlichen Ansicht sowie einer Ansicht von Hinten;
- Figuren 2a und 2b:: ein zweites Ausführungsbeispiel analog der Figuren 1a und 1b in einer seitlichen Ansicht sowie einer Ansicht von Hinten;
- Figur 3a bis 3d:: ein drittes Ausführungsbeispiel analog der Figuren 1a und 2a in einer seitlichen Ansicht;
- Figur 4a bis 4d:: ein viertes Ausführungsbeispiel analog der Figuren 1a und 2a in einer seitlichen Ansicht;
- Figur 5a bis 5f:: Ausführungsbeispiele erfindungsgemäßer Gepäckfixierungsvorrichtungen gemäß der vorstehenden Abbildungen zu Grundformen ohne dargestellte Spannmittel;
- Figur 6:: das Ausführungsbeispiel gemäß Figur 5a mit einem gestrichelt angedeuteten Rucksack als für einen Transport gesichertes Gepäckstück;
- Figur 7:: ein Ausführungsbeispiel einer erfindungsgemäßen Gepäckfixierungsvorrichtung gemäß den Abbildungen der Figuren 5a und 6 in einem transportsicheren PassivZustand und
- Figuren 8a und 8b:: Schnittdarstellungen eines Haltemittels mit darin geführtem Spannmittel in einer Situation bei einstellbarer Länge des Spannmittels sowie einer Situation bei fixierter Länge des Spannmittels vor der Fixierung eines Gepäckstücks.

Über die Abbildungen der Zeichnung und Ausführungsbeispiele hinweg werden für gleiche Bauteile stets die gleichen Bezeichnungen und Bezugszeichen verwendet.

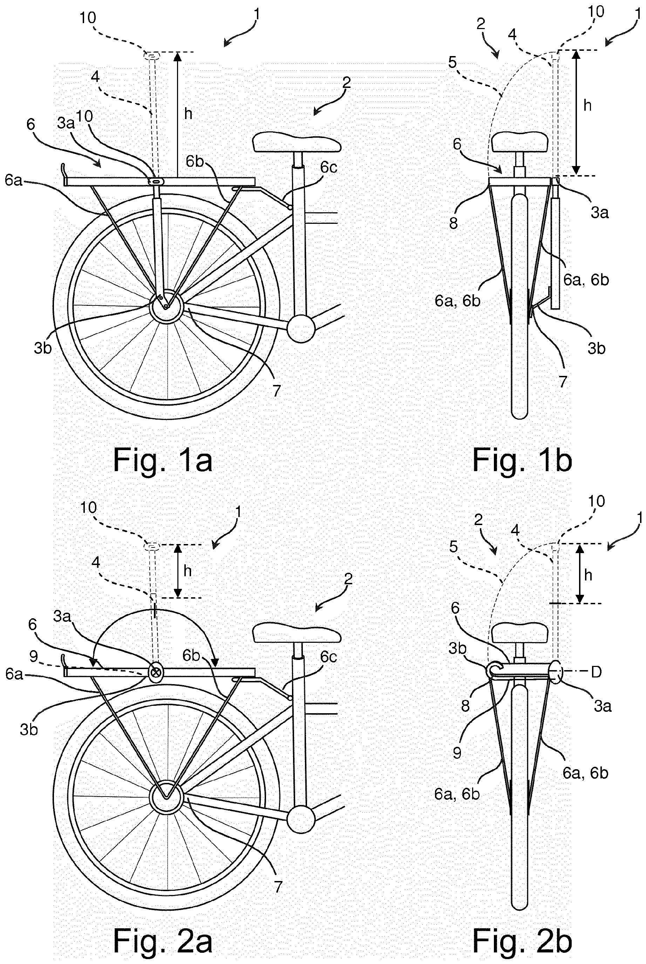

Figur 1a zeigt ein erstes Ausführungsbeispiel einer erfindungsgemäßen Gepäckfixierungsvorrichtung 1 für ein Zweirad 2, hier ein Fahrrad, in schematischer Darstellung einer seitlichen Ansicht. Die Gepäckfixierungsvorrichtung 1 kann aber ebenso an einem Kraftrad in Form eines Elektro-Fahrrades, eines Mofas, Mopeds, Motorrollers oder gar eines Motorrades eingesetzt werden. Die Gepäckfixierungsvorrichtung 1 umfasst eine erste Fixierung 3a und eine zweite Fixierung 3b, ein Haltemittel 4 und ein Spannmittel 5. Die an einer Gepäckauflage 6 befestigte erste Fixierung 3a und die an einem Rahmenteil 7 des Fahrrads 2 befestigte zweite Fixierung 3b sind in dem gezeigten ersten Ausführungsbeispiel über das Haltemittel 4 mit einander verbunden. Die Gepäckauflage 6 selber ist in der Regel über zwei stützende Streben 6a, 6b und eine Haltestrebe 6c mit dem Rahmenteil 7 verbunden.

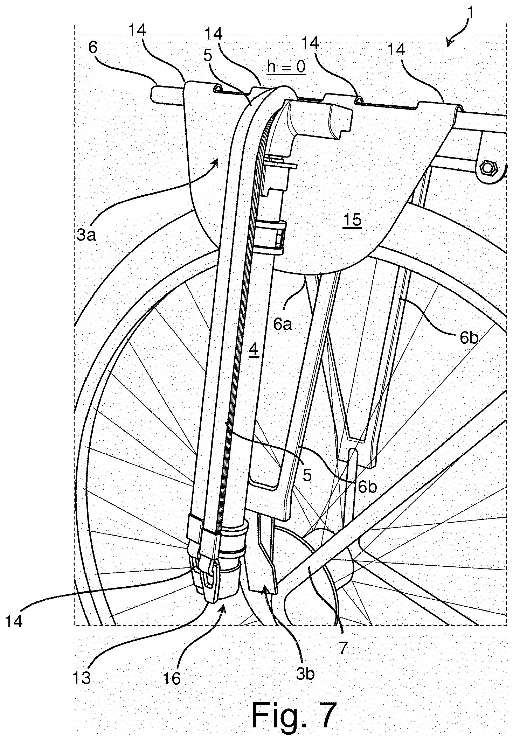

Das Spannmittel 5, welches an dem Haltemittel 4 durch Einhaken fest oder lösbar verbunden ist, ist gegenüber der ersten Fixierung 3a an einer Kante 8 der Gepäckauflage 6 im benutzten Zustand, also zur Sicherung eines hier nicht weiter dargestellten Gepäckstücks, befestigbar. Im unbenutzten Zustand wird das Spannmittel 5 nahe der zweiten Fixierung 3b, an einem Rahmenteil 7 des Fahrrads 2 so gegen übliche Belastungen während einer Fahrradfahrt befestigt, dass das Spannmittel 5 während der Fahrt nicht in die Speichen des Fahrrads 2 gerät. Hierzu wird auch auf die nachfolgende Beschreibung zu Figur 7 verwiesen.

Figur 1b zeigt die Gepäckfixierungsvorrichtung 1 von Figur 1a in einer Ansicht von hinten. Hier wird der sehr geringe zusätzliche Platzbedarf dieser Vorrichtung mit der ersten Fixierung 3a an dem Gepäckträger 6 und einer zweiten Fixierung 3b am Rahmen 7 im Bereich eines Hinterrades deutlich.

Analog der Darstellung von Figur 1a zeigt Figur 2a ein zweites Ausführungsbeispiel in schematischer Darstellung einer Seitenansicht. Die erste Fixierung 3a und die zweite Fixierung 3b sind - im Gegensatz zum ersten Ausführungsbeispiel - dabei beide an der Gepäckauflage 6 befestigt und mittels eines unterhalb der Gepäckauflage 6 verlaufenden Verbindungselements 9 verbunden. Das Verbindungselement 9 ist als Schiene oder Bügel an der zweiten Fixierung 3b durch ein Gelenk D ausschwenkbar befestigt bzw. eingehakt, wodurch das Ausschwenken des Verbindungselements 9 eine einfache Montage wie Demontage der Gepäckfixierungsvorrichtung 1 möglich ist. Zur Aufnahme eines Moments ist das Verbindungselement 9 als im Wesentlich ebenes Element mehreckig, hier ungefähr dreieckig so ausgeführt, dass die erste Fixierung 3a und/oder die zweite Fixierung 3b einen als Hebel dienenden, linienförmigen Kontakt mit der Gepäckauflage 6 bzw. einer Kante 8 der Gepäckauflage 6 bilden. Die erste Fixierung 3a ist in diesem Ausführungsbeispiel als Klemm-Schraubenverbindung ausgeführt und verankert das Verbindungselement 9 fest an der Gepäckauflage 6.

Als wesentlicher Unterschied zwischen diesen Ausführungsformen ist die in Figur 2a angedeutete Schwenkbarkeit des Haltemittels 4 im Bereich der ersten Fixierung 3a hervorzuheben. Durch die Wahl der Lage einer Drehachse kann das Haltemittel 4 in einer ungenutzten, passiven Stellung hier in eine Ebene mit der Gepäckauflage 6 geklappt werden. Bei einem Einsatz wird das Haltemittel 4 in eine im Wesentlichen senkrecht zur Ebene der Gepäckauflage 6 stehenden Stellung gebracht und dort verrastet, siehe Hinteransicht von Figur 2b.

Beiden vorstehend beschriebenen Ausführungsbeispielen ist gemein, dass das jeweilige Haltemittel 4 um eine Länge h zur Anpassung an ein jeweiliges Gepäckstück 12 verlängerbar ist. Dementsprechend ist ein oberes freies Ende 10 des Haltemittels 4 mit daran oder darin fixierten Spannmitteln 5 in seiner Lage veränderbar. Hierauf wird nachfolgend noch im Detail eingegangen werden.

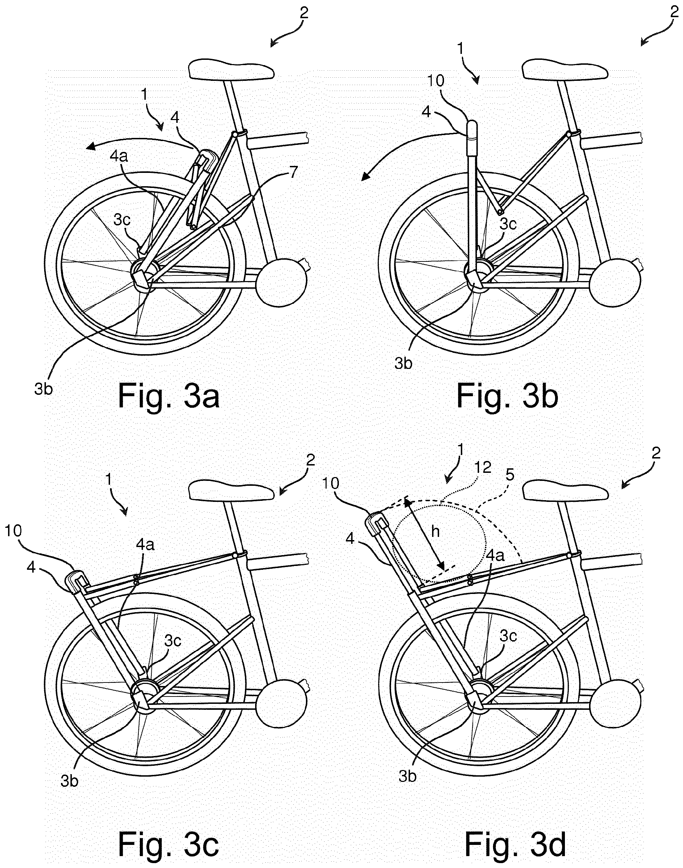

Ein drittes Ausführungsbeispiel der Erfindung ist in den Abbildungen der Figuren 3a bis 3d in einer seitlichen Ansicht dargestellt. Im wesentlichen Unterschied zu den ersten beiden Ausführungsbeispielen ist diese Gepäckfixierungsvorrichtung 1 nicht auf das Vorhandensein einer Gepäckauflage 6 angewiesen. Das Haltemittel 4 ist um einen Bügel 4a erweitert worden, mit dem es als einstückiges und einen Hinterreifen umgreifendes Bauteil an Fixierungen 3b, 3c im Bereich der Hinterradachse beidseitig angelenkt ist, siehe Figur 3c. Damit ist das Haltemittel 4 hier nun schwenkbar zwischen einer im Wesentlichen senkrechten Position und einer passiven Stellung, die in der Nähe eines Rahmenteils 7 liegt. Zur Fixierung in jeder dieser Endlagen, wie sie in den Figuren 3a und 3d angedeutet sind, ist die erste Fixierung 3a in diesem Ausführungsbeispiel in Form mindestens einer, hier aber zweier Gelenkketten quasi doppelt ausgeführt und koppelt das Haltemittel 4 mit einem Rahmenteil 7 z.B. hier im Bereich einer Feststellschraube bzw. Fixierung einer Sattelstütze. Alternativ wäre auch eine Anlenkung an Fixierung eines Sattels auf dem Sattelrohr denkbar. In jedem Fall ist zu diesem dritten Ausführungsbeispiel hervorzuheben, dass es durch die hier doppelt vorgesehenen und in den Endstellungen einrastend ausgebildeten Gelenkketten eine Ebene einer zuvor nicht vorhandenen Gepäckauflage 6 schafft, auf die bei entsprechend fachmännisch ausgeführter Fixierung bzw. Arretierung ein Gepäckstück 20 gelegt und an dem Haltemittel 4 durch die angedeuteten Gurte 5 fixierbar ist.

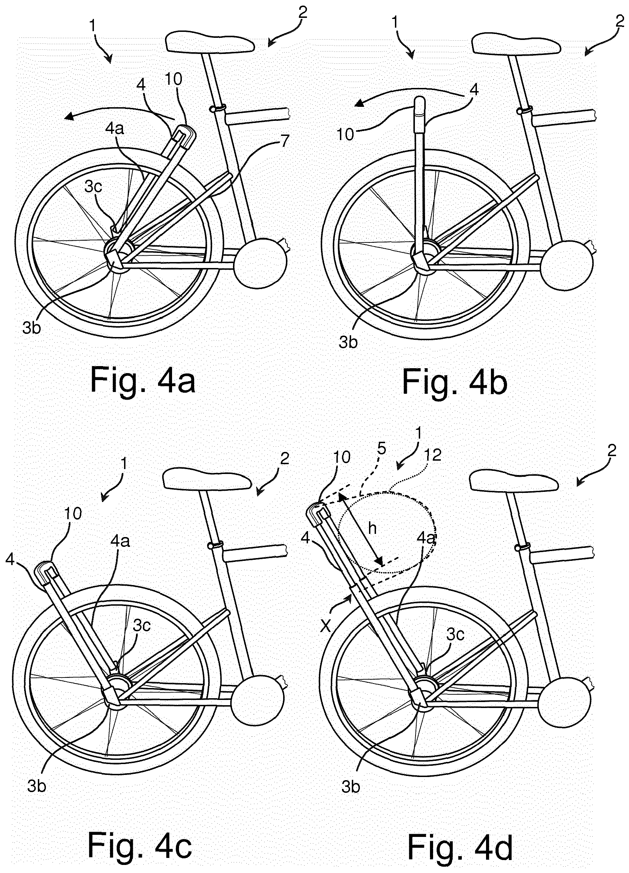

Alternativ ist es nach einer vierten Ausführungsform gemäß Figuren 4a - 4d in Abwandlung der Ausführungsform der Figuren 3a - 3d möglich, dass dann auf die mindestens eine Gelenkkette verzichtet werden kann, wenn die gelenkartig ausgebildeten Fixierungen 3b, 3c des Haltemittels 4 mindestens eine, vorzugsweise mindestens zwei Rasterstellungen für eine Passivstellung gemäß Figur 4a und eine Aktivstellung z.B. gemäß Figur 4c oder 4d aufweisen. An der Stelle X in Figur 4d ist eine nicht weiter dargestellte klappbare kleine Platte oder in einer Ausführungsform eine Ablage aus zwei klappbaren Schienen angeordnet, um ein skizziertes Transportgut 20 auch schon vor dem Fixieren an dem Haltemittel 4 durch nur angedeutete Spannelemente bzw. Gurte 5 abstellen zu können. Wie schon zuvor anhand der Abbildung von Figur 3d erkennbar, so kann auch hier nun ein Gepäckstück quer zu einer Längsachse des Zweirads 2 an das Haltemittel 4 angelehnt und dann durch bekannte Spanngurte 5 fixiert werden.

Die Abbildungen der Figuren 1a, 2a, 3a und 4a zeigen das erste bis vierte Ausführungsbeispiel einer Gepäckfixierungsvorrichtung 1 jeweils nur in einer Endstellung mit angedeuteten Spannmitteln 5. In den beschriebenen Ausführungsbeispielen ist das Haltemittel 4 teleskopierbar bzw. in der jeweiligen Aktivstellung teleskopartig ausziehbar ausgebildet, um in einer Höhe h einem jeweiligen Gepäckstück entsprechend anpassbar zu sein. Die maximal einstellbare Länge h ist beim ersten, dritten und vierten Ausführungsbeispiel prinzipiell größer, als beim zweiten Ausführungsbeispiel, aber in jedem Fall zur Lagesicherung bekannter Gepäckstücke ausreichend. Beim ersten Ausführungsbeispiel wird die größere teleskopierbare Höhe h auch dazu genutzt, das Haltemittel 4 in einer passiven Stellung bis auf die Ebene der Gepäckauflage 6 quasi zu versenken. Auch bei dem dritten und vierten Ausführungsbeispiel ist eine entsprechende passive Stellung erreichbar, die zudem durch ein Hinwegklappen in eine Passivstellung gekennzeichnet ist, wodurch die in ihrer Größe minimierte Vorrichtung 1 nahezu in Deckung mit einem Rahmenteil 7 gebracht wird.

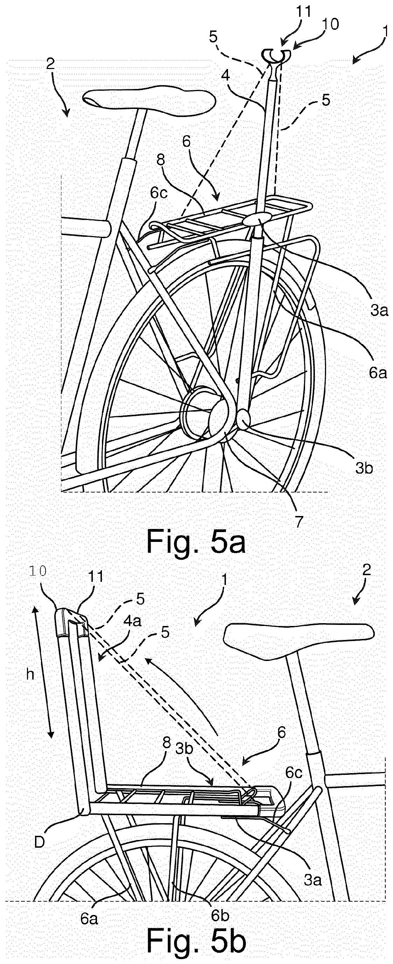

Die Abbildung von Figur 5a zeigt das erste Ausführungsbeispiel einer erfindungsgemäßen Gepäckfixierungsvorrichtung 1 wieder unter Andeutung von Spannmitteln 5, wobei das teleskopierbare Haltemittel 4 mittels der hier nur schematisch dargestellten ersten Fixierung 3a an der Gepäckauflage in Form eines Gepäckträgers 6 des Fahrrads 2 und über die hier nur schematisch dargestellte zweite Fixierung 3b im Bereich einer Hinterradachse an dem Fahrradrahmen 7 befestigt ist, wobei der Gepäckträger 6 über Streben 6a und 6c an dem Fahrradrahmen 7 fixiert ist. An dem oberen, freien Ende 10 des Haltemittels 4 ist hier nun eine Aussparung 11 vorgesehen. Diese Aussparung 11 ist in dem vorliegenden Ausführungsbeispiel zur Verbesserung der Handhabung griffförmig und mit stufenloser Anpassung einer Höhe h sowie deren Fixierung ausgebildet. Weiter bietet dieses freie Ende 10 bekannte Möglichkeiten zum Einhängen bzw. Fixieren mindestens eines Hakens eines Spanngurtes 5.

Die Abbildung der Figur 5b zeigt eine Variante der zweiten Ausführungsform der Erfindung gemäß Figuren 2a und 2b, bei der nun ein Drehpunkt D an ein in Fahrtrichtung des Fahrrades 2 hinten gelegenes Ende des Gepäcksträgers 6 verlagert worden ist. Der zu Figur 2a beschriebene linienförmige Kontakt der Vorrichtung 1 mit der Gepäckauflage 6 ist im Bereich der Kante 8 zu einem U-förmigen Rahmen erweitert worden, an dem die Fixierungen 3a, 3b integriert sind. Wiederum ist das Haltemittel 4 zu einem Bügel 4a erweitert worden, an dessen Griffteil 11 eine erforderliche Höhe h eingerichtet werden kann. Zugleich können an dem gleichsam als Lehne fungierenden Bügel 4a Spanngurte 5 eingehakt oder anderweitig so fixiert werden, dass sie sich am freien Ende 10 nicht selbstständig lösen können.

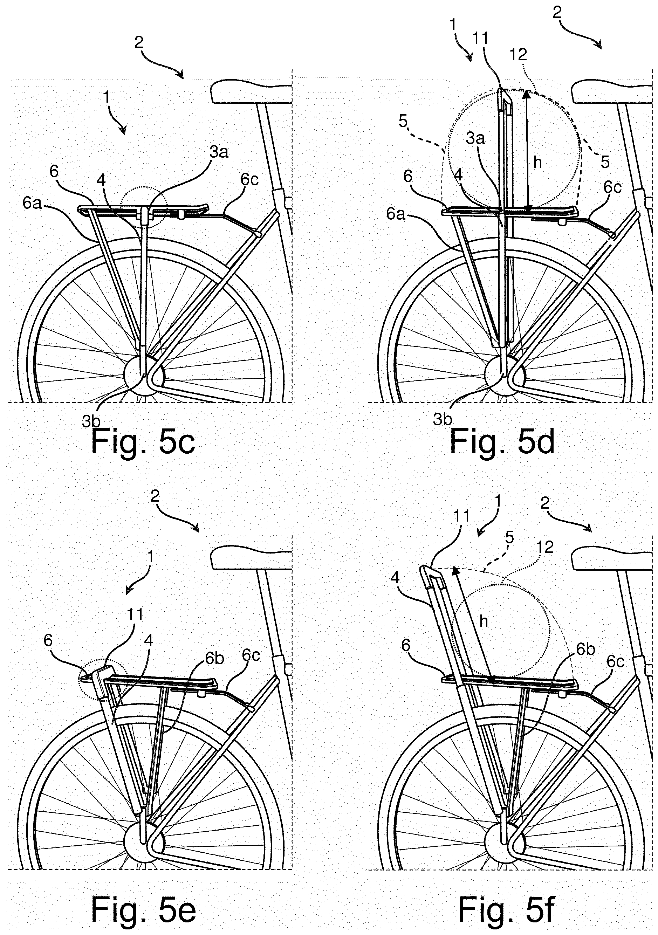

Die Abbildungen der Figuren 5c und 5d sowie 5e und 5f zeigen eine Variation des ersten Ausführungsbeispiels der Erfindung mit einer vertikalen und einer gegenüber der Vertikalen geneigten, im Wesentlichen aber weiterhin vertikal verlaufenden Ausrichtung des Haltemittels 4 unter Andeutung möglicher Verläufe von Spanngurten 5 in einem jeweils nur grob skizzierten beladenen Zustand. An diesen Abbildungen wird deutlich, dass das Haltemittel 4 auch in Form eines Bügels 4a als Nachrüstteil, wie schon als integraler Bestandteil eines Gepäckträgers 6 realisierbar ist. In beiden dargestellten Fällen verlaufen Schenkel des Bügels 4a parallel zu einer von in diesem Ausführungsbeispiel zwei Streben 6a, 6b eines handelsüblichen Gepäckträgers 6. Damit können diese Streben bei einer Integration einer erfindungsgemäßen Vorrichtung durch den Bügel 4a ersetzt werden. Eine erfindungsgemäße Vorrichtung 1 wird damit zu einem integralen Bestandteil eines Gepäckträgers 6. Zudem wird anhand der Abbildungen der Figuren 5c und 5e in den gepunktet eingezeichneten Bereichen deutlich, dass in einer passiven Stellung der Bügel 4a eine im Wesentlichen plane Auflagefläche des Gepäckträgers 6 durch konstruktive Maßnahmen, wie z.B. entsprechende Aussparungen etc. in einer Auflagefläche des Gepäckträgers 6, sichergestellt ist. Dem Griffteil 11 am freien Ende 10 des Bügels 4a kommt dabei als Handhabungselement bei der Bedienungsfreundlichkeit sowie der Verrastung in einer jeweiligen Höhe h eine besondere Bedeutung zu.

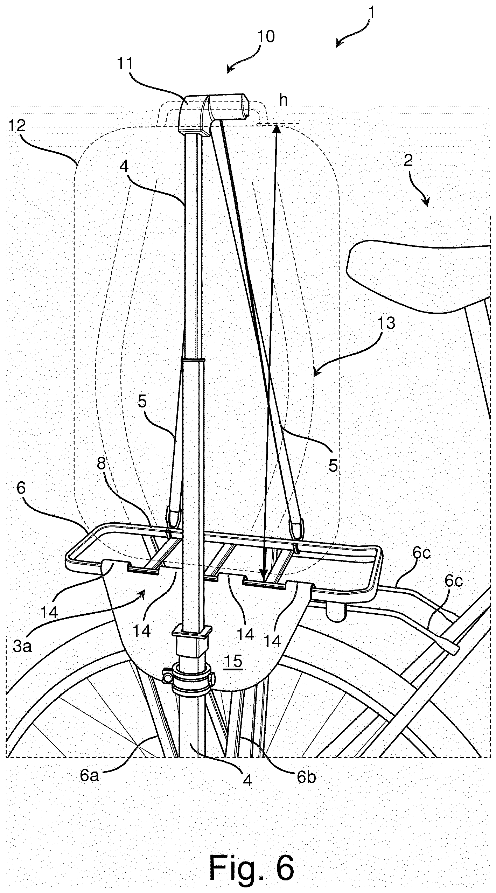

Figur 6 zeigt in Fortführung des Ansatzes von Figur 1a, 1b und 5 ein Ausführungsbeispiel einer erfindungsgemäßen Gepäckfixierungsvorrichtung 1 mit einem gestrichelt angedeuteten Gepäckstück 12 in Form eines zu transportierenden Rucksacks. Neben einem Griff des Gepäckstücks 12 können auch die angedeuteten Tragegurte eines Rucksacks als Gepäckstück 12 in die Aussparung 11 an dem freien Ende 10 des Haltemittels 4 eingelegt und/oder dort fixiert werden. Die Spannmittel 5 verlaufen in diesem Ausführungsbeispiel innerhalb des Haltemittels 4, um aus der griffartigen Aussparung 11 an dem freien Ende 10 auszutreten und mittels Haken 13 an einer der ersten Fixierung 3a gegenüber liegenden Kante 8 der Gepäckauflage 6 unter Zugbeanspruchung fixiert zu werden. Als Spannmittel 5 sind hier zwei elastische Gurte zur Lastensicherung vorgesehen.

Die erste Fixierung 3a weist in diesem Ausführungsbeispiel mehrere Haken 14 auf, die zur Fixierung an einem Gepäckträger 6 durch Einhängen ausgebildet sind, hier an einer Kante 8 der Gepäckauflage 6. Das stangenförmige Haltemittel 4 ist dazu mit einem Flächenelement 15 durch eine Schelle verbunden, wobei das Flächenelement 15 in diesem Beispiel an einer oberen Endkante vier Haken 14 zum Einhängen an einem fest installierten Gepäckträger oder an einer an- und abnehmbaren Gepäckauflage 6 trägt. Die Gepäckauflage 6 kann weiter beispielsweise durch ein Bügelschloss gebildet werden oder eines umfassen.

Figur 7 zeigt das Ausführungsbeispiel einer erfindungsgemäßen Gepäckfixierungsvorrichtung 1 gemäß Figur 5a mit dem Haltemittel 4 im eingeschobenen bzw. verstauten Zustand, wobei als Spannmittel 5 zwei Spanngurte im Inneren einer teleskopierbaren Haltestange des Haltemittels 4 geführt werden. Diese Spanngurte 5 treten an der griffförmigen Aussparung 11 aus der Haltestange heraus und sind im Bereich der zweiten Fixierung 3b mittels der Haken 13 an einer Aussparung 16 des Haltemittels 4 zum sicheren Verstauen im unbenutzten Zustand stabil verankert.

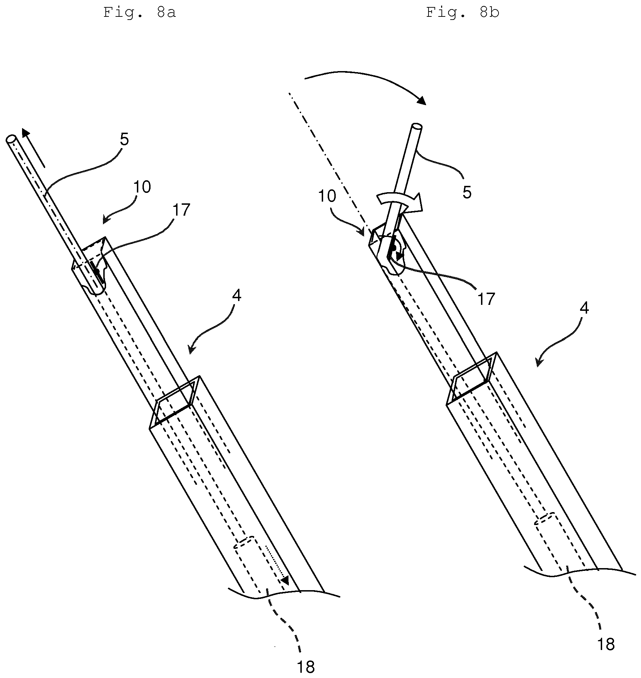

Die Abbildungen der Figuren 8a und 8b zeigen schließlich in Schnittdarstellungen eines Haltemittels 4 eine Lösung, wie darin ein Spannmittel 5 gehalten und sicher geführt sowie in einer Einsatz-Situation durch geeignete Mittel auf eine bestimmte Länge einstellbar ist. Aus Gründen der besseren Übersichtlichkeit ist nur ein Spannmittel 5 innerhalb eines teleskopierbar ebenfalls in seiner Länge einstellbaren Haltemittels 4 dargestellt, wobei das Haltemittel 4 hier nach Art eines Handhebels eines sog. Trolley-Koffers selber auch stufenlos einstellbar ist. Auch ist ein dementsprechend ausgebildetes Griffteil 11 hier weggelassen worden.

Zur freien Einstellbarkeit der Länge des Spannmittels 5 ist im Bereich des freien Endes 10 innerhalb des Haltemittels 4 eine Wippe 17 angelenkt, die eine freie Entnahme des Spannmittels 5 in axialer Richtung gestattet, wie in Figur 8a durch den Freischnitt angedeutet. Die Entnahme des Spannmittels 5 erfolgt hierbei gegen die Kraft eines Rückzugsmechanismus 18, der u.a. als Druckfeder ausgebildet sein kann. Im vorliegenden Ausführungsbeispiel bildet ein einfaches und innerhalb des Haltemittels 4 geführtes und gegen die Erdanziehungskraft verschiebliches Gewicht den Rückzugsmechanismus 18, wie in der Abbildung von Figur 8a angedeutet.

Figur 8b zeigt nun die Situation, wonach eine ausreichende Länge an Spannmittel 5 aus dem Haltemittel 4 entnommen worden ist. Das Haltemittel 4 wird nun entlang des eingezeichneten Pfeils um ein nicht weiter dargestelltes Gepäckstück zur Fixierung gelegt. Die am freien Ende 10 innerhalb des Haltemittels 4 angelenkte Wippe 17 bzw. Doppelhebel wird mit einem Verkippen des Spannmittels 5 aus der axialen Richtung heraus automatisch betätigt. Die Wippe 17 bewirkt so eine Klemmung des Spannmittels 5 in dem Haltemittel 4 und damit eine Fixierung auf eine eingestellte Länge, wie durch den kleineren Pfeil an der Wippe 17 angedeutet. Damit ist eine gewünschte Länge des Spannmittels 5 fixiert. Nach einem Lösen des Spannmittels 5 wird zugleich auch diese Fixierung automatisch gelöst und das Spannmittel 5 wird selbsttätig in das Haltemittel 4 zurückgezogen und dort bis zu einem nächsten Einsatz sicher gelagert.

Die Erfindung ist nicht auf das dargestellte Ausführungsbeispiel beschränkt und kann sowohl für Muskelkraft betriebene Zweiräder als auch für Motor-betriebene Zweiräder angewendet werden. Vorstehend wurde die Erfindung unter Bezug auf die Ausführungsbeispiele der Zeichnung im Zusammenhang mit fest installierten Gepäckträgern 6 oder ganz ohne Gepäckträger 6 dargestellt. Für den Fachmann ist aber deutlich erkennbar, dass die Erfindung in den dargestellten Ausführungsformen auch an solchen nachrüstbaren Gepäckauflagen angebracht werden kann, die z.B. über eine Klemmvorrichtung an einer Sattelstütze fixiert sind.

### Bezugszeichenliste

- 1: Gepäckfixierungsvorrichtung
- 2: Fahrrad, Zweirad
- 3a: erste Fixierung
- 3b: zweite Fixierung
- 3c: zweite Fixierung im Bereich der Hinterradachse
- 4a: Haltemittel in Form eines Bügels
- 4: Haltemittel
- 5: Spannmittel
- 6: Gepäckauflage / Gepäckträger
6a Strebe
6b Strebe
6c Haltestrebe der Gepäckauflage 6 zum Rahmenteil 7 hin
7 Rahmenteil
8 Kante der Gepäckauflage 6
9 Verbindungselement
10 (oberes) freies Ende des Haltemittels 4
11 Ausnehmung / Aussparung / Griffteil
12 Gepäckstück (Rucksack)
13 Haken
14 Haken für Ausbildung der ersten Fixierung 3a
15 Flächenelement
16 Aussparung
17 Wippe zur Klemmung des Spannmittels 5
18 Rückzug-Mechanismus für Spannmittel 5 im Haltemittel 4
h einstellbare Höhe des Haltemittels 4, vorzugsweise mit Fixierungsmitteln am Griffteil 11
D Drehpunkt / Gelenk
X Stelle zur Fixierung oder Anlenkung einer Platte oder Schiene

## Patentansprüche

1. Gepäckfixierungsvorrichtung (1) für ein Zweirad, insbesondere ein Fahrrad (2) oder Kraftrad, welches eine erste Fixierung (3a, 3c), ein Haltemittel (4), eine zweite Fixierung (3b) und mindestens ein Spannmittel (5) umfasst, wobei
das Haltemittel (4) im Wesentlichen vertikal verlaufend in einer im Wesentlichen senkrechten Position arretierbar ist und zur Aufnahme von Gepäck (12) im Bereich eines Hinterrad-Gepäckträgers und zur Sicherung des Gepäcks (12) durch das mindestens eine Spannmittel (5) ausgebildet ist und
über die erste Fixierung (3a) und die zweite Fixierung (3b) direkt oder indirekt mit dem Zweirad (2) verbunden ist
**dadurch gekennzeichnet, dass** das mindestens eine Spannmittel (5) im Inneren des Haltemittels (4) geführt ist.

2. Gepäckfixierungsvorrichtung (1) nach Anspruch 1, **dadurch gekennzeichnet, dass** die erste Fixierung (3a) und die zweite Fixierung (3b) über das Haltemittel (4) mit einander verbunden sind.

3. Gepäckfixierungsvorrichtung (1) nach einem der beiden vorhergehenden Ansprüche, **dadurch gekennzeichnet, dass** die erste Fixierung (3a) an einer Gepäckauflage (6) angeordnet ist und die zweite Fixierung (3b) an einem Rahmenteil (7) des Zweirads (2) angeordnet ist.

4. Gepäckfixierungsvorrichtung (1) nach dem vorhergehenden Anspruch, **dadurch gekennzeichnet, dass** die erste Fixierung (3a) in Form mindestens eines Hakens (13) ausgeführt ist, der zur Fixierung an einem Gepäckträger (6) durch Einhängen oder Festklemmen ausgebildet ist.

5. Gepäckfixierungsvorrichtung (1) nach Anspruch 1, **dadurch gekennzeichnet, dass** das Haltemittel (4) um einen Bügel (4a) erweitert und als einen Hinterreifen des Zweirads (2) umgreifendes Bauteil ausgebildet ist, das an Fixierungen (3b, 3c) im Bereich der Hinterradachse schwenkbar zwischen einer im Wesentlichen senkrechten Position und einer passiven Stellung im Wesentlichen parallel an einem Rahmenteil (7) angelenkt ist
wobei die erste Fixierung (3a) in Form mindestens einer Gelenkkette ausgeführt ist und das Haltemittel (4) mit einem Rahmenteil (7) im Bereich z.B. hier einer Fixierung eines Sattelrohrs koppelt, oder
die Fixierungen (3b, 3c) des Haltemittels (4) gelenkartig ausgebildet sind und mindestens eine, vorzugsweise zwei Rasterstellungen für eine Aktivstellung und/oder eine Passivstellung des Haltemittels (4) aufweisen.

6. Gepäckfixierungsvorrichtung (1) nach einem der Ansprüche 1 und 2, **dadurch gekennzeichnet, dass** die erste Fixierung (3a) als Hülse oder in sonstiger Form als Gleitlager ausgebildet ist, die an dem Haltemittel (4) in dessen Längsrichtung verschieblich gelagert sowie fixierbar ist und über mindestens einen Stab insbesondere im Bereich eines Sattels des Zweirads verbunden ist und die zweite Fixierung (3b) an einem anderen Rahmenteil (7) des Zweirads angeordnet ist, vorzugsweise im Bereich einer Hinterradachse.

7. Gepäckfixierungsvorrichtung (1) nach Anspruch 1, **dadurch gekennzeichnet, dass** die erste Fixierung (3a) und die zweite Fixierung (3b) an einer Gepäckauflage (6) befestigt sind, wobei die erste Fixierung (3a) und die zweite Fixierung (3b) über ein Verbindungselement (9), insbesondere in Form eines Bügels oder einer Schiene, verbunden sind, an dem das Haltemittel (4) fixiert ist.

8. Gepäckfixierungsvorrichtung (1) nach dem vorhergehenden Anspruch, **dadurch gekennzeichnet, dass** die erste Fixierung (3a) und/oder zweite Fixierung (3b) unterhalb einer Gepäckauflage (6) angeordnet sind.

9. Gepäckfixierungsvorrichtung (1) einem der vorhergehenden Ansprüche, **dadurch gekennzeichnet, dass** das Haltemittel (4) an dem Verbindungselement (9) nach Anspruch 7 oder im Bereich einer ersten Fixierung (3a) zwischen einer im Wesentlichen horizontalen Ruhelage parallel zu einer Längsachse des Zweirads (2) und einer im Wesentlichen vertikalen Lage schwenkbar ausgebildet ist oder das Haltemittel (4) oberhalb oder auf Höhe einer Gepäckauflage (6) schwenkbar gelagert ist.

10. Gepäckfixierungsvorrichtung (1) nach einem der vorhergehenden Ansprüche, **dadurch gekennzeichnet, dass** das Spannmittel (5) von dem freien Ende (10) des Haltemittels (4) her und an einer der ersten Fixierung (3a) gegenüber liegenden Seite an einer Kante (8) der Gepäckauflage (6) oder an einem Rahmenteil (7) eines Zweirads (2) befestigbar ist, insbesondere zur Sicherung der Lage eines Gepäckstücks (12).

11. Gepäckfixierungsvorrichtung (1) nach einem der vorhergehenden Ansprüche, **dadurch gekennzeichnet, dass** das Haltemittel (4) teleskopierbar und insbesondere teleskopartig in einer Höhe (h) einem Gepäckstück (12) entsprechend anpassbar ist, insbesondere stufenlos in der Höhe (h) anpassbar und in einer jeweiligen Höhe (h) fixierbar ist.

12. Gepäckfixierungsvorrichtung (1) nach einem der vorhergehenden Ansprüche, **dadurch gekennzeichnet, dass** das Haltemittel (4) an dem freien Ende (10) eine Aussparung (11) aufweist, die insbesondere griffförmig ausgebildet ist und vorzugsweise Mittel zur Einstellung einer Höhe (h) umfasst.

13. Gepäckfixierungsvorrichtung (1) nach einem der vorhergehenden Ansprüche, **dadurch gekennzeichnet, dass** als Spannmittel (5) mindestens ein elastischer Gurt vorgesehen ist, der an dem Ende (10) des Haltemittels (4) fixiert und durch Mittel (17) in seiner Länge einem jeweiligen Gepäckstück (12) angepasst einstellbar ist.

14. Gepäckfixierungsvorrichtung (1) nach einem der vorhergehenden Ansprüche, **dadurch gekennzeichnet, dass** das Spannmittel (5) als elastischer Gurt an einem losen Ende eine Öse mit einem Haken (13) zum Befestigen des Gepäcks bzw. eines Gepäckstücks (12) aufweist.

15. Gepäckfixierungsvorrichtung (1) nach einem der vorhergehenden Ansprüche, **dadurch gekennzeichnet, dass** das Spannmittel (5) als elastischer Gurt an einem losen Ende einen Haken (13) zum sicheren Fixieren des ungenutzten Spannmittels (5) durch Einhaken an einer Aussparung (16) aufweist, die insbesondere im Bereich der zweiten Fixierung (3b) vorgesehen ist.

## Claims

1. A luggage securing device (1) for a two-wheeled vehicle, in particular a bicycle (2) or motorcycle, which includes a first securing element (3a, 3c), a holding element (4), a second securing element (3b), and at least one tensioning element (5); the holding element (4) is embodied so that it extends essentially in the vertical direction for accommodating luggage (12) in the region of a rear-wheel luggage rack and is embodied to secure the luggage (12) by means of the at least one tensioning element (5) and
is connected to the two-wheeled vehicle (2) directly or indirectly by means of the first securing element (3a) and the second securing element (3b),
**characterized in that** the at least one tensioning element (5) is guided inside the holding element (4).

2. The luggage securing device (1) according to claim 1, **characterized in that** the first securing element (3a) and second securing element (3b) are connected to each other by means of the holding element (4).

3. The luggage securing device (1) according to one of the two preceding claims, **characterized in that** the first securing element (3a) is positioned on a luggage rack (6) and the second securing element (3b) is positioned on a frame part (7) of the two-wheeled vehicle (2).

4. The luggage securing device (1) according to the preceding claim, **characterized in that** the first securing element (3a) is embodied in the form of at least one hook (13) that is embodied to be secured to a luggage rack (6) by being hooked or clamped in place.

5. The luggage securing device (1) according to claim 1, **characterized in that** the holding element (4) has a bracket (4a) added to it and is embodied as a component that encompasses the rear wheel of the two-wheeled vehicle (2) and is linked to securing elements (3b, 3c) situated in the vicinity of the rear wheel axle so that it is able to pivot between an essentially vertical position and a passive position that is essentially parallel to a frame part (7);
the first securing element (3a) is embodied in the form of at least one sprocket chain and couples the holding element (4) to a frame part (7) in the vicinity of - in this case, for example - a securing element for a saddle tube or
the securing elements (3b, 3c) of the holding element (4) are embodied as articulating and have at least one, preferably two, locking positions for an active position and/or a passive position of the holding element (4).

6. The luggage securing device (1) according to one of claims 1 and 2, **characterized in that** the first securing element (3a) is embodied as a sleeve or some other form of plain bearing, which is supported on the holding element (4) so that it is able to move in its longitudinal direction and can also be locked in position and, by means of at least one rod, is connected particularly in the vicinity of a saddle of the two-wheeled vehicle and the second securing element (3b) is positioned on another frame part (7) of the two-wheeled vehicle (2), preferably in the vicinity of a rear wheel axle.

7. The luggage securing device (1) according to claim 1, **characterized in that** the first securing element (3a) and second securing element (3b) are fastened to a luggage rack (6) and the first securing element (3a) and second securing element (3b) are connected by means of a connecting element (9), particularly in the form of a bracket or a rail to which the holding element (4) is fixed.

8. The luggage securing device (1) according to the preceding claim, **characterized in that** the first securing element (3a) and/or second securing element (3b) are positioned below a luggage rack (6).

9. The luggage securing device (1) according to one of the preceding claims, **characterized in that** the holding element (4) is supported on the connecting element (9) according to claim 7 or in the vicinity of a first securing element (3a) so that it is able to pivot between an essentially horizontal home position parallel to a longitudinal axis of the two-wheeled vehicle (2) and an essentially vertical position or the holding element (4) is supported in pivoting fashion above or at the level of a luggage rack (6).

10. The luggage securing device (1) according to one of the preceding claims, **characterized in that** the tensioning element (5) can be fastened from the free end (10) of the holding element (4) and on a side opposite from the first securing element (3a), can be fastened to an edge (8) of a luggage rack (6) or to a frame part (7) of a two-wheeled vehicle (2), particularly in order to secure the position of a piece of luggage (12).

11. The luggage securing device (1) according to one of the preceding claims, **characterized in that** the holding element (4) is able to telescope and in particular, can be adapted in telescoping fashion to a height (h) corresponding to a piece of luggage (12) and in particular, can be smoothly adapted in height (h) and can be immobilized at a respective height (h).

12. The luggage securing device (1) according to one of the preceding claims, **characterized in that** the free end (10) of the holding element (4) has an opening (11) that is particularly embodied in the form of a grip and preferably includes means for adjusting a height (h).

13. The luggage securing device (1) according to one of the preceding claims, **characterized in that** the tensioning element (5) is provided in the form of at least one elastic belt that is attached to the end (10) of the holding element (4) and can be adjusted so that it is adapted in length to a respective piece of luggage (12).

14. The luggage securing device (1) according to one of the preceding claims, **characterized in that** the tensioning element (5) in the form of an elastic belt has an eyelet at a loose end with a hook (13) for fastening luggage or a piece of luggage (12).

15. The luggage securing device (1) according to one of the preceding claims, **characterized in that** the tensioning element (5) in the form of an elastic belt has a hook (13) at a loose end for reliably securing the unused tensioning element (5) by hooking it in an opening (16) that is in particular provided in the vicinity of the second securing element (3b).

## Revendications

1. Dispositif de fixation de bagages (1) pour une bicyclette, en particulier un vélocipède (2) ou une motocyclette, qui comprend une première fixation (3a, 3c), un moyen de retenue (4), une seconde fixation (3b) et au moins un moyen de serrage (5), dans lequel le moyen de retenue (4) est réalisé de manière à s'étendre sensiblement verticalement pour recevoir des bagages (12) dans la zone d'un porte-bagages de roue arrière et pour immobiliser les bagages (12) par ledit au moins un moyen de serrage (5), et
qui est relié directement ou indirectement à la bicyclette (2) par la première fixation (3a) et par la seconde fixation (3b),
**caractérisé en ce que** ledit au moins un moyen de serrage (5) est guidé à l'intérieur du moyen de retenue (4).

2. Dispositif de fixation de bagages (1) selon la revendication 1, **caractérisé en ce que** la première fixation (3a) et la seconde fixation (3b) sont reliées l'une à l'autre par le moyen de retenue (4).

3. Dispositif de fixation de bagages (1) selon l'une des deux revendications précédentes, **caractérisé en ce que** la première fixation (3a) est agencée sur un support de bagages (6) et la seconde fixation (3b) est agencée sur une partie de cadre (7) de la bicyclette (2).

4. Dispositif de fixation de bagages (1) selon la revendication précédente, **caractérisé en ce que** la première fixation (3a) est réalisée sous la forme d'au moins un crochet (13) qui est réalisé pour la fixation par accrochage ou par coincement sur un porte-bagages (6).

5. Dispositif de fixation de bagages (1) selon la revendication 1, **caractérisé en ce que** le moyen de retenue (4) est élargi d'un arceau (4a) et est réalisé en tant que composant entourant un pneumatique arrière de la bicyclette (2), qui est articulé sur des fixations (3b, 3c) dans la zone de l'axe de roue arrière en pouvant pivoter entre une position sensiblement verticale et une position passive sensiblement parallèlement à une partie de cadre (7),
dans lequel la première fixation (3a) est réalisée sous la forme d'au moins une chaîne articulée, et le moyen de retenue (4) est couplé à une partie de cadre (7) dans la zone d'une fixation d'un tube de selle par exemple, en l'occurrence, ou
les fixations (3b, 3c) du moyen de retenue (4) sont réalisées en forme d'articulation et présentent au moins une, de préférence deux positions de trame pour une position active et/ou une position passive du moyen de retenue (4).

6. Dispositif de fixation de bagages (1) selon l'une des revendications 1 et 2, **caractérisé en ce que** la première fixation (3a) est réalisée sous forme de douille ou d'une autre manière en tant que palier coulissant qui est monté sur le moyen de retenue (4) avec faculté de coulissement dans sa direction longitudinale et qui est susceptible d'être fixé et relié par au moins un barreau en particulier dans la zone d'une selle de la bicyclette, et la seconde fixation (3c) est agencée sur une autre partie de cadre (7) de la bicyclette, de préférence dans la zone d'un axe de roue arrière.

7. Dispositif de fixation de bagages (1) selon la revendication 1, **caractérisé en ce que** la première fixation (3a) et la seconde fixation (3b) sont fixées sur un support de bagages (6), la première fixation (3a) et la seconde fixation (3b) étant reliées par un élément de liaison (9), en particulier sous la forme d'un arceau ou d'un rail, sur lequel est fixé le moyen de retenue (4).

8. Dispositif de fixation de bagages (1) selon la revendication précédente, **caractérisé en ce que** la première fixation (3a) et/ou la seconde fixation (3b) sont agencées au-dessous d'un support de bagages (6).

9. Dispositif de fixation de bagages (1) selon l'une des revendications précédentes, **caractérisé en ce que** le moyen de retenue (4) est réalisé sur l'élément de liaison (9) selon la revendication 7 ou dans la zone d'une première fixation (3a) en pouvant pivoter entre une position de repos sensiblement horizontale parallèle à un axe longitudinal de la bicyclette (2) et une position sensiblement verticale, ou le moyen de retenue (4) est monté avec faculté de pivotement au-dessus de ou à la hauteur d'un support de bagages (6).

10. Dispositif de fixation de bagages (1) selon l'une des revendications précédentes, **caractérisé en ce que** le moyen de serrage (5) est susceptible d'être fixé sur un bord (8) du support de bagages (6) ou sur une partie de cadre (7) d'une bicyclette (2) depuis l'extrémité libre (10) du moyen de retenue (4) et sur un côté opposé à la première fixation (3a), en particulier pour immobiliser la position d'un bagage (12).

11. Dispositif de fixation de bagages (1) selon l'une des revendications précédentes, **caractérisé en ce que** le moyen de retenue (4) est télescopique et en particulier adaptable télescopiquement à une hauteur (h) en correspondance d'un bagage (12), en particulier adaptable en continu à la hauteur (h) et susceptible d'être fixé à une hauteur respective (h).

12. Dispositif de fixation de bagages (1) selon l'une des revendications précédentes, **caractérisé en ce que** le moyen de retenue (4) présente une échancrure (11) à l'extrémité libre (10), qui est réalisée en particulier en forme de poignée et qui comprend de préférence des moyens pour régler une hauteur (h).

13. Dispositif de fixation de bagages (1) selon l'une des revendications précédentes, **caractérisé en ce qu'**il est prévu en tant que moyen de serrage (5) au moins une sangle élastique qui est fixée à l'extrémité (10) du moyen de retenue (4) et qui est réglable par des moyens (17) en étant adaptée de par sa longueur au bagage respectif (12).

14. Dispositif de fixation de bagages (1) selon l'une des revendications précédentes, **caractérisé en ce que** le moyen de serrage (5) en tant que sangle élastique présente à une extrémité libre un oeillet pourvu d'un crochet (13) pour fixer les bagages ou un bagage (12).

15. Dispositif de fixation de bagages (1) selon l'une des revendications précédentes, **caractérisé en ce que** le moyen de serrage (5) en tant que sangle élastique présente à une extrémité libre un crochet (13) pour la fixation sûre du moyen de serrage (5) non utilisé par accrochage dans une échancrure (16) qui est prévue en particulier dans la zone de la seconde fixation (3b).
